# EUROPEAN PATENT SPECIFICATION

(11) **EP 1 891 526 B1**
(45) Date of publication and mention of the grant of the patent: **22.02.2012**
(21) Application number: 06771057.4
(22) Date of filing: 23.05.2006
(51) Int. Cl.: G06F 11/00, H04L 12/56

(54) **SYSTEM AND METHODS FOR PROVIDING A NETWORK PATH VERIFICATION PROTOCOL**
SYSTEM UND VERFAHREN ZUM BEREITSTELLEN EINES NETZWEGÜBERPRÜFUNGSPROTOKOLLS
SYSTEMES ET PROCEDES DESTINES A FOURNIR UN PROTOCOLE DE VERIFICATION DES VOIES DU RESEAU

(30) Priority: 23.05.2005 US 135253
(43) Date of publication of application: 27.02.2008
(73) Proprietor: Cisco Technology, Inc., San Jose, CA 95134 (US)
(72) Inventor: GUICHARD, James N, Groton, Massachusetts 01450 (US); VASSEUR, Jean-Philippe, Dunstable, Massachusetts 01827 (US); NADEAU, Thomas D., Hampton, New Hampshire 03842 (US); WARD, David D, Somerset, Wisconsin 54025 (US); PREVIDI, Stefano, I-00191 Roma (IT)
(74) Representative: Kazi, Ilya
(86) International application number: PCT/US2006/020066
(87) International publication number: WO 2006/127799

(56) References cited:
- EP-A2- 1 463 245
- EP-A2- 1 469 636
- WO-A2-02/089406
- US-A1- 2004 081 101
- US-A1- 2004 213 160
- US-A1- 2004 218 542
- US-A1- 2005 083 835
- US-B1- 6 700 874

## Description

### BACKGROUND

In a typical Virtual Private Network (VPN), a plurality of local LANs, or subnetworks, interconnect via a core network to provide each subnetwork with the appearance of sharing a common network with each of the other LANs. Each LAN, or subnetwork, has one or more gateway nodes, or customer equipment (CE) routers, through which traffic egressing and ingressing to and from the LAN passes. The gateway nodes connect to a network service provider router, or provider equipment (PE) router, at the edge of the core network, operable to provide transport to the other subnetworks in the VPN. The CE and PE routers are sometimes referred to as "edge" routers due to their proximity on the edge of a customer or provider network. The core network, which may be a public access network such as the Internet, a physically separate intranet, or other interconnection, provides transport to a remote PE router. The remote PE router couples to a remote CE router representing the ingress to a remote subnetwork, or LAN, which is part of the VPN. The remote CE router performs forwarding of the message traffic to the destination within the remote VPN (LAN) subnetwork.

Conventional VPNs are particularly well suited to the advantages provided by Multi-Protocol Label Switching (MPLS) networks. Traditional MPLS networks, and more recently generalized MPLS (G-MPLS) networks as well, extend the suite of IP protocols to expedite the forwarding scheme used by conventional IP routers, particularly through core networks employed by service providers (as opposed to end-user connections or taps). Conventional routers typically employ complex and time-consuming route lookups and address matching schemes to determine the next hop for a received packet, primarily by examining the destination address in the header of the packet. MPLS has greatly simplified this operation by basing the forwarding decision on a simple label, via a so-called Label Switch Router (LSR) mechanism. Therefore, another major feature of MPLS is its ability to place IP traffic on a particular defined path through the network as specified by the label. Such path specification capability is generally not available with conventional IP traffic. In this manner, MPLS provides bandwidth guarantees and other differentiated service features for a specific user application (or flow).

Current IP-based MPLS networks arc emerging for providing advanced services such as bandwidth-based guaranteed service (i.e. Quality of Service, or QoS), priority-based bandwidth allocation, and preemption services. Accordingly, MPLS networks are particularly suited to VPNs because of their amenability to high speed routing and security over service provider networks, or so called Carrier's Carrier interconnections. Such MPLS networks, therefore, perform routing decisions based on path specific criteria, designating not only a destination but also the intermediate routers (hops), rather then the source/destination specification in IP which leaves routing decisions to various nodes and routing logic at each "hop" through the network.

In a conventional VPN, the core network may be an MPLS network adapted to perform label switched path (LSP) routing. Alternatively, the core network or subnetworks thereof may perform destination based routing, such as IP, which specifies the destination of a particular packet. LSP routing, as is known in the art, allows routing based on a path indicative of particular nodes and./or high speed links. Therefore, LSP routing allows routing decisions to be coordinated which criteria such as QOS or contractual service guarantees, for example.

In US Patent Application Publication No. 2004/0213160 describes echo messaging for Operation, Administration, and Management (OAM) of a service-based distribution path and associated services. Service-based distribution paths or transport tunnels include services mapped or bound to a path associated with the transport tunnel. Echo messaging provides OAM capabilities to monitor the operational state of a service-based distribution path, including determining configuration, connectivity, and other characteristics of the path and associated services that transport data. EP 1 463 245 discloses an OAM tool that enables a network operator to verify the path that an Ethernet frame traverses through bridges in a bridged Ethernet LAN. Verification is performed using a mechanism to ping the path a frame will traverse. An Ethernet path verification message (Eping message) is sent in the data path, the message having a new EtherType that identifies it as a path verification message. The method verifies the data path that frames actually take, rather than determining the data path that frames should take as is done by other known methods that utilize the control plane for path determination.

### SUMMARY

Configurations discussed further below are based on the observation that, in a conventional VPN having subnetworks interconnected by a core network, customer edge (CE) routers serving a VPN LAN are not privy to connectivity and path attribute information within the core network. A conventional CE router, therefore, is unable to interrogate the core network for determining connectivity (i.e. availability) of a particular path, or path attributes for determining, for example, whether a particular QoS level is supportable on a particular link or via a particular route. Accordingly, a conventional local CE router is unable to determine availability of, or determine transmission attributes to, a remote VPN location (destination).

Therefore, determination of paths that satisfy a QoS or other delivery speed/bandwidth guarantee may be difficult or unavailable in a conventional CE router. Accordingly, it can be problematic to perform routing decisions for QoS based traffic. Further, such QoS levels and related attributes may become contractual terms between service providers and customers. In particular, in L3 VPN MPLS networks, path QoS (relating to attributes such as path bandwidth, jitter, delay and loss) often pertain to a service level agreement (SLA) that a provider typically sells to a customer as a contract for service.

Conventional request/reply protocols are devoid of features for allowing a CE device connected to a PE to obtain information about the path taken by the data traffic between the local and remote PE, and between itself and a remote location within its VPN context (i.e. in the remote VPN LAN). This information is of utmost importance to a customer so as to be able to verify and measure connectivity and path attribute properties within the network-based VPN infrastructure. It would therefore be beneficial to provide a path verification protocol (PVP) employing a predetermined set of path verification messages (PVMs) for identifying, gathering, and analyzing network attributes and connectivity information. Application examples of the use of such a protocol are provided in the copending applications cited below. Such a PVM Protocol, therefore, allows a client to send a PV (path verification) request to its locally attached PE-router so as to gather the relevant set of information about the requested path.

Accordingly, configurations discussed herein substantially overcome the above described shortcomings by providing a path verification protocol (PVP) for determining attributes and availability of particular paths through a core network to a remote VPN destination. The PVP provides a mechanism to diagnose and report path availability and attribute information via a set of path verification messages (PVMs) sent between path verification processors at routers along the path in question. A request message requests a particular informational item, and is sent by the requesting CE router to a PE router of the core network. The receiving PE router identifies the message as a PVM, and employs diagnostic logic for determining the requested result. The receiving PE router may send additional PVMs to other routers within the core as diagnostic probe messages for determining the attributes and availability of the path in question. Each such PVM message triggers a PVM reply by the receiving router indicative of the requested information. The receiving PE router gathers the PVM replies received, aggregates the PVM messages to identify the relevant attributes, and computes the requested result for transmission back to the requesting CE.

Network performance attributes (attributes) employed for core network diagnostics generally fall into two families of path characteristics, and the verification/diagnostics thereof, that are of interest when considering conventional network-based IP VPNs. The first is path verification in terms of basic connectivity that is detailed in copending U.S. Patent Application No. 11/048,077, filed on February 1, 2005, entitled "SYSTEM AND METHODS FOR NETWORK PATH DETECTION" (Atty. Docket No. CIS04-52(10418).

The second group of characteristics of interest to a customer of a network-based VPN fall under the umbrella of "real-time" statistics. This can be loosely defined as the ability for a customer edge router (CE) to obtain real-time statistics related to a particular path used by that CE to carry its traffic across the core of the network-based VPN provider. Such attribute properties include (but are not limited to) delay (one way and round trip), jitter, and error rate (i.e.: packet loss/error). Currently these types of statistics are provided by some service providers, but are based largely on average values that are insufficient to enable the customer to compute real-time path characterization. A particular approach is discussed in copending U.S. Patent Application No. 11/086,007, entitled "SYSTEM AND METHODS FOR IDENTIFYING NETWORK PATH PERFORMANCE", filed March 22, 2005 (Atty. Docket) CIS04-50(10325)).

In further detail, the method of gathering information concerning network paths as disclosed herein includes receiving a request for information indicative of a particular network path, the path being associated with a core network, and computing the requested information at a provider edge router associated with the core network, in which the core network attributes are unavailable (not visible) directly from the router initiating the request. A path verification processor sends the requested information to the requesting node in a reply message, in which the request for information and the reply message are conformant to a path verification protocol operable for identifying and propagating information indicative of network attributes in the core network.

In the exemplary configuration, the path verification processor is operable to compute the requested information by identifying network attributes indicative of the requested information, and transmit at least one diagnostic probe message operative for determining the identified network attributes. Diagnostic logic in the path verification processor determines, based on responses to the transmitted probe messages, the requested information. Typically, the path verification processor transmits, responsive to the received request for status and according to the diagnostic logic, successive diagnostic probe messages operable to retrieve information for determining the status or attributes.

In a typical configuration, processing the request for information/status includes receiving the request from a CE router by a PE router, and transmitting the additional probe messages form the receiving PE router. The diagnostic probe messages are path verification messages (PVMs) having a common header and at least one payload field, in which the payload is indicative of the type of information requested by the reply. The message builder populates the common header with at least one of a protocol version, a message type, a set of flags, a sequence number and a security credential, such as smart cards, passwords, and certificates. The payload field is a set of variable length TLVs, and a message builder builds the PVM message by populating the common header; and, for each requested attribute, determines a corresponding TLV type, and populates the TLV in the payload field.

In a particular configuration, the path verification messages are further defined by message types including a request to compute status information regarding a particular destination, a reply to a request including the requested status information, an error indicative of administrative irregularities impeding evaluation of the requested information. A typical arrangement involves sending a set of successive PVM messages responsive to a PVM request, aggregating each of the responses from the successive PVM messages, in which the aggregation operable for computing the result, and generating the PVM reply including the status from the aggregated responses for sending back to the requesting CE router.

In the exemplary configuration, the TLVs are further indicative of a path verification, in which the path verification operable to determine communicability to at least one particular destination, each of the TLVs further including a destination for which path communicability is sought, and an evaluation count indicative of a number of evaluations to be performed. The TLVs may include, for example, path attribute requests for attributes indicative of communicability status, in which one or more of the TLVs further include the destination for which attribute evaluation is requested, an evaluation count indicative of a number of evaluations to be performed, and at least one attribute for evaluation.

In the exemplary arrangement, the path verification processor avoids flooding the core network with the successive diagnostic probe messages by includes identifying a recurrence threshold indicative of an acceptable rate of successive PVM messages, and curtailing successive PVM messages to conform to the identified recurrence threshold.

Alternate configurations of the invention include a multiprogramming or multiprocessing computerized device such as a workstation, handheld or laptop computer or dedicated computing device or the like configured with software and/or circuitry (e.g., a processor as summarized above) to process any or all of the method or operations disclosed herein as embodiments of the invention. Still other embodiments of the invention include software programs such as a Java Virtual Machine and/or an operating system that can operate alone or in conjunction with each other with a multiprocessing computerized device to perform the method embodiment steps and operations summarized above and disclosed in detail below. One such embodiment comprises a computer program product that has a computer-readable medium including computer program logic encoded thereon that, when performed in a multiprocessing computerized device having a coupling of a memory and a processor, programs the processor to perform the operations disclosed herein as embodiments of the invention to carry out data access requests. Such arrangements of the invention are typically provided as software, code and/or other data (e.g., data structures) arranged or encoded on a computer readable medium such as an optical medium (e.g., CD-ROM), floppy or hard disk or other medium such as firmware or microcode in one or more ROM or RAM or PROM chips, field programmable gate arrays (FPGAs) or as an Application Specific Integrated Circuit (ASIC). The software or firmware or other such configurations can be installed onto the computerized device (e.g., during operating system for execution environment installation) to cause the computerized device to perform the techniques explained herein as embodiments of the invention.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
Fig. 1 is a context diagram of a network communications environment including edge notes interconnected with a core network suitable for use with the invention;
Fig. 2 is a flowchart depicted the operation of the path verification protocol in the network of Fig. 1;
Fig. 3 is a block diagram of edge routers employing Path Verification Messages (PVMs) using the Path Verification Protocol (PVP); and
Figs. 4-7 are a flowchart of the operation of the path verification processor in the network of Fig. 3.

### DETAILED DESCRIPTION

Configurations of the invention provide a path verification protocol (PVP) for defining, implementing, and analyzing path verification messages (PVMs) in a VPN environment such as an MPLS network. Typical VPN environments are characterized by service level agreements (SLAs) between service providers that specify particular service level and/or bandwidth level guarantees, typically in terms of megabits per second (MB/s) or other qualitative transfer criteria. Such guarantees are often expressed in contractual terms as Quality of Service (QoS) criteria. Configurations herein provide a mechanism for determination of paths and/or routes that satisfy a QoS or other delivery speed/bandwidth guarantee. Such a mechanism may therefore be employed to perform routing decisions for QoS based traffic. Further, such a mechanism is employable to verify QoS levels and related attributes related to contractual terms between service providers and customers.

Conventional request/reply protocols are devoid of features for allowing a CE device connected to a PE to obtain information about the path taken by the data traffic between the local and remote PE, and about paths between itself and a remote location within its VPN context. This information is of utmost importance to a customer so as to be able to verify and measure connectivity and path attribute properties within the network-based VPN infrastructure. Such a PVM Protocol, therefore, allows a client to send a PVM (path verification) request to its locally attached PE-router so as to gather the relevant set of information about the requested path.

Accordingly, configurations herein disclose a protocol so as to address specific requirements such as Path Verification and Traffic Statistics collection between nodes potentially residing in disjoint domains. The path verification protocol (PVP) determines attributes and availability of particular paths through a core network to a remote VPN destination. The PVP provides a mechanism to diagnose and report path availability and attribute information via a set of path verification messages (PVMs) sent between path verification processors at routers along the path in question. A request message requests a particular informational item, and is sent by the requesting CE router. The receiving PE router identifies the message as a PVM, and employs diagnostic logic for determining the requested result. The receiving PE router may send additional PVMs to other routers as diagnostic probe messages for determining the attributes and availability of the path in question. Each such successive PVM message triggers a PVM reply by the receiving router indicative of the requested information. The receiving PE router gathers the PVM replies received, aggregates the PVM messages to identify the relevant attributes, and computes the requested result for transmission back to the requesting CE router.

The Path Verification Message (PVM) Protocol, or Path Verification Protocol (PVP) discussed further below, is operable on a variety of transport protocols adapted for use with in MPLS and VPN based networks. In the exemplary configuration, a set of message types, including request messages, reply messages, and error messages further include fields for other path attribute information.

With respect to applicable transport platforms, The PVM protocol is operable to employ various suitable transport protocols, including: UDP (User Datagram Protocol), TCP (Transmission Control Protocol, if reliable messaging and congestion control are required) and SCTP (if reliable messaging, congestion control and multi-stream are required).

If an unreliable protocol such as UDP is used as a transport protocol, the requesting router relies on a fixed or exponential back-off timer approach to resend messages for which no response has been received after a pre-determined (user configurable) timer, discussed further in copending U.S. Patent Application No. 11/063,803, filed February 23, 2005, entitled "METHODS AND APPARATUS BASED ON MESSAGE TRANSMISSION TIMES" (Atty. Docket No. CIS04-60(10524)). If the TCP or SCTP transport protocol is used, then no embedded reliable messaging mechanism is required within the PVM protocol. Even in this case, the sender can always discern the optimal transmission time-out time using the configurations in the above described copending application.

The Path Verification Protocol (PVP), therefore, includes an enumeration of Path Verification messages (PVMs). Now discussed below are three exemplary message types including a common PVM header. Note that PVM messages are not restricted to be exchanged within a single routing domain.

A PVM common header contains the following fields (not necessarily in the specified order): PVM protocol version, message type (request, reply, error), sequence number used to uniquely identify the request, security identification information and optional flags.

Also note that the PVP header and its payload may be encrypted using some commonly used encryption scheme such as MD5. Further, in particular arrangements, the entire packet may be sent/received via a security encryption tunneling mechanism such as IPSec.

Note further that, based on the header information provided above, receivers may discriminate traffic based on this information for the sake of security (i.e.: rate limiting, prevention of Distributed Denial of Service (DDoS) attacks, or to provide a means of hiding portions of the network, etc...). In the case of the latter, for example, an operator may not wish for a customer to view information about the structure of their core network. In these cases, it is at the discretion of the operator to filter the information returned, yet the protocol will continue to function at a minimum level.

The common header is then followed by a set of variable length TLVs (Type/Length Value parameters, particularly suited to parsing in sequentially organized data flows such as network protocols, as is known in the art). An exemplary PVM Request message, therefore, is composed as follows. PVM Request messages are used by a CE so as to gather information about a particular path on which it does not have full visibility. Such request is sent to the PE but could also be exchanged between two PE to satisfy a request coming from a CE. The format of the PVM request message is a set of variable length TLVs characterizing the request following the common header specified above, where each TLV is specific to the request type. For the sake of illustration, two exemplary TLVs are defined below. Other suitable configurations include other TLVs. accordingly; the present configuration is not intended limited to such exemplary TLVs.

Path_Verification TLV specifies the following parameters:
- Destination for which a path verification is required,
- Number of evaluation N_ev

Note that in term of format, the Path_Verification TLV may contain a set of destinations followed by a unique N_ev entry, should the same number of evaluations be required for all destinations. If N_ev>1, then the PE should try to verify the path for each requested destination N_ev times and sends a positive reply if at least of them succeeds.

Path_Attribute_Request TLV specifies the following parameters:
- Destination for which a path attribute evaluation is requested,
- Number of evaluation N_ev,
- Set of attributes to be evaluated (delay, jitter, loss, round trip time (RTT))

Note that for some attributes additional sub-TLVs may be employed to further qualify the request. For example, the CE may request to compute the RTT using the average (or the peak) of N_ev evaluations and return the results. More than one attribute may be requested in the PVM request message.

A PVM Reply message includes a common header followed by a set of variable length TLVs, the content of which is specific to the request types received in the corresponding PVM request message. For example, if the CE requests the computation of the average jitter for a specific path, the PVM reply message will contain a TLV containing the array whose entries indicate the value of the N_ev computed jitters.

A PVM error message is made of the common header specified above and a variable length set of flags indicating the error type. Such errors may include, for example, indications that the PVM request is not supported, that the PVM requested is not authorized, or that the rate of requests is not compliant with contract terms and a congested state (i.e. PVM requests received but the PE device experiences some congestion, thus delays must be anticipated to provide a response).

As a measure of security, and to protect the CPU usage at the PE-router, each PE-router supporting the PVM protocol mechanisms also implements a dampening algorithm whereby the rate of requests coming from clients should not exceed a configurable threshold. Crossing of this threshold should result in the PE-router dampening the client. The information present in the packet header may be employed for implementing such a threshold.

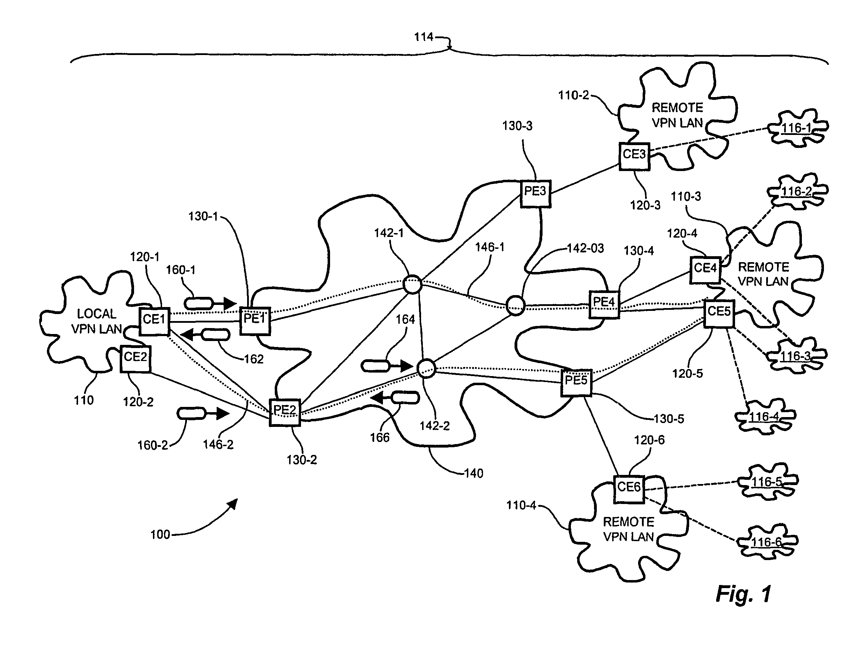

Fig. 1 is a context diagram of a network communications environment 100 including edge nodes 120, 130 interconnected with a core network 140 suitable for use with configurations discussed herein. Referring to Fig. 1, the network communications environment 100 includes a plurality of LANs 110-1..110-4 (110 generally) comprising a virtual private network (VPN) 114. Each of the LANs 110 connects to the core network 140 for interconnecting the VPN LANs 110. Each LAN 110 has one or more customer edge (CE) routers 120-1..120-6 (120 generally) denoting an ingress and egress point to the core network 140. Each CE router 120, therefore, connects to a respective provider edge (PE) router 130-1..130-5 denoting an ingress/egress point to the core network 140. Accordingly, the edge routers 120, 130 denote connections of each of the VPN LANs to the core network 140 operated by a service provider. The core network 140 further includes a plurality of provider switching nodes 142-1..142-3 (142, generally), such as label switch path (LSP) routers, IP based routers, and other suitable switching devices. Further, each of the LANs 110 connects to end users by way of one or more subnets 116-1..116-6 (116, generally), or network prefixes, denoting the end users served by that subnet 116. The exemplary CE router 120-1 is operable to send a PVM request 160 to PE1 router 130-1, and the PE1 router 130-1 is operable to receive the PVM request 160, and generate a PVM response 162 including the requested information, for transmission back to the CE router 120-1, discussed in further detail below.

In operation, by way of example, there exist one or more paths through the core network between the local CE router 120-1 and a remote VPN LAN 110-3 destination, such as subnet 116-3. From the local CE1 router, a path 146-1 exists through PE1 router 130-1, and an alternate path 146-2 exists through PE2 router 130-2. Router CE1 may make a decision to router on path 146-1, by routing through router 130-1, or via path 146-2, by routing through router 130-2. As CE routers 120 are unable to directly obtain routing path and attribute information concerning the core network 140, router CE1 sends a PVM request 160-1, 160-2 to PE1 and PE2, respectively, to determine the fastest path to router CE5 120-5, serving subnet 116-3.

PE routers 130-1 and 130-2 compose and send PVM probe messages 164 to inquire first about connectivity to router CE3, and about transmission speed along the paths 146-1 and 146-2. For example, if node 142-1 is down, then there is no connectivity on path 146-1. Conversely, for example, node 142-1 is up, and thus path 146-1 has connectivity to CE5 but has a limited available bandwidth of 10 MB/s. However, the VPN provider has a service level agreement (SLA) to provide 40 MB/s between VPN LANs 110. However, the PVM messages 160 identify transmission bandwidth of at least 50 MB/s along each route on path 146-2. Accordingly, the PVM replies 166 inform the requesting router 130-2 of an available 50 MB/s on path 146-2. Both PE1 and PE2 report a PVM reply 162 to CE1, and CE1 is able to make a routing decision to route traffic to PE2 for path 146-2, thereby achieving the 40MB/s requirement. Note that the exemplary SLA, as is known in the industry, is often applied the other attributes discussed herein as well, such as delay, jitter, loss, mean time to repair and down time, to mention several. The configurations herein are operable to manage and monitor any suitable attribute in addition to those specified.

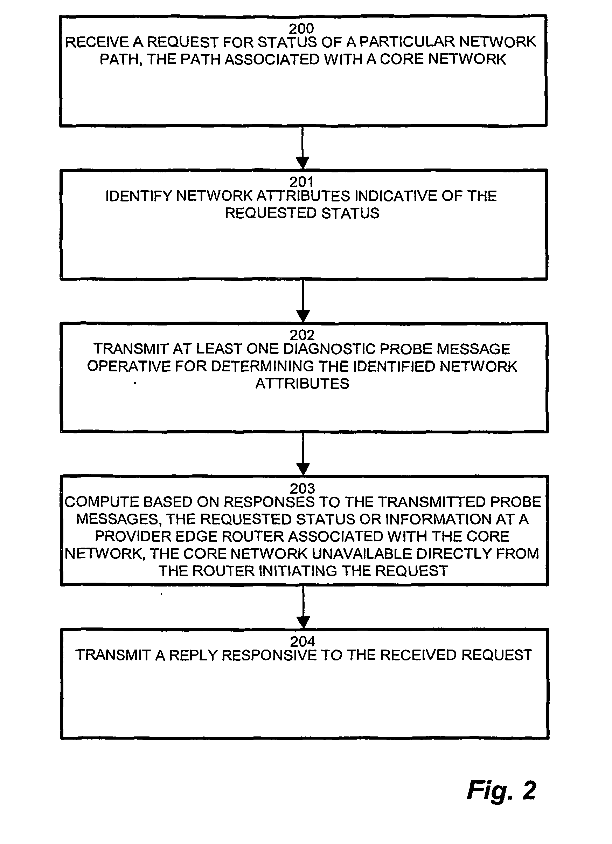

Fig. 2 is a flowchart depicted the operation of the path verification protocol in the network of Fig. 1. Referring to Figs. 1 and 2, the method of gathering information concerning network paths 146 as disclosed herein includes receiving a request for status of a particular network path, the path being associated with a core network 140, as depicted at step 200. The path may depict a label switched path (LSP) through the core 140, defined by LSP routers 142, or an IP path defined by the destination IP address. Typically, the initiating CE router 120 is looking for information to make a routing decision, and sends the PVM request 160 to the corresponding PE router.

The receiving PE router 130-1 identifies network attributes indicative of the requested status, as shown at step 201, such as path attributes and router availability along each of the hops on the path 146. To determine the path attributes and availability, the PE router 130-1 transmits one or more diagnostic probe messages 164 operative for determining the identified network attributes, as shown at step 202. The diagnostic probe messages 146 are further PVM messages, such as attribute request messages, to resolve the request in the PVM request message 160. The provider edge router 130 associated with the core network 140 computes, based on responses 166 to the transmitted probe messages 164, the requested information, in which the core network 140 is unavailable directly from the router 120-1 initiating the request, as depicted at step 203. In this manner, the path verification protocol enables computation of network visibility and diagnostic information which the requesting CE router 120 is-1 unable to ascertain by itself. The PE router 130-1 then transmits the PVM reply 162 responsive to the received request, as depicted at step 204.

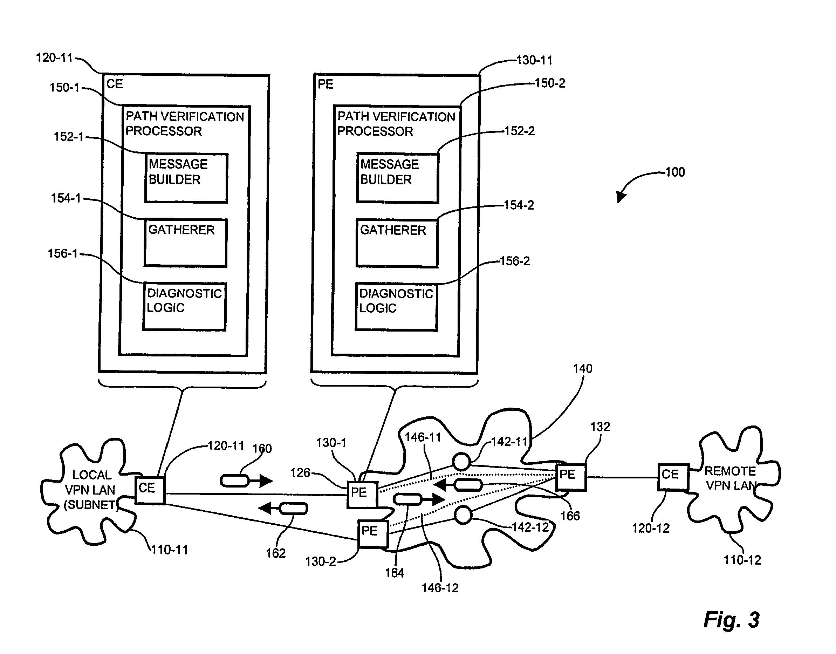

Fig. 3 is a block diagram of edge routers 120, 130 employing path verification messages (160, 162, 164, 166) using the Path Verification Protocol (PVP). Referring Figs. 1 and 3, the customer edge router 120-11 and the provider edge router 130-11 include a path verification processor 150-1..150-2 (150 generally). The path verification processor 150-1 includes a message builder 152-1 (152), a gatherer 154-1 (154) and diagnostic logic 156-1 (156). The path verification processor 150-2 in router 130-11 is similarly equipped. Other edge routers 120, 130 may also have path verification processors 150 for communicating via path verification messages (PVMs) as discussed further below.

In operation, in the exemplary configuration, the CE router 120-11 generates a PVM request 160 for transmission to PE router 130-11, as indicated above, and receives the corresponding PVM response 162. In the path verification processor 150, the message builder 152 is operable to generate the PVM message 160 according to the type of information requested. The gatherer 154 is operable to receive messages from other PVP enabled routers 120, 130, such as diagnostic probe messages 164 sent to retrieve information and/or attributes from other PVP routers 120, 130. The diagnostic logic 156 analyzes the responses 166 sent in response to the probe messages 164 for aggregating the information in the probe responses 166 and computing the requested information for the PVM response 162. In a typical exemplary configuration, an initiating CE router 120-11 initiates a request with the PVM request message 160. The receiving PE router 130-11 receives the request 160 and sends one or more additional PVM messages as probes 164 in response. The probes 164 are themselves PVM messages operable to identify the information requested in the PVM request 160, such as availability (connectivity) of a particular node or the bandwidth capacity of a particular link. Such bandwidth capacity may be used, for example, to determine if a particular service level (i.e. transmission speed) may be accommodated on a particular link. From the responses 166 to the probes 164, the diagnostic logic 156 computes the response 162.

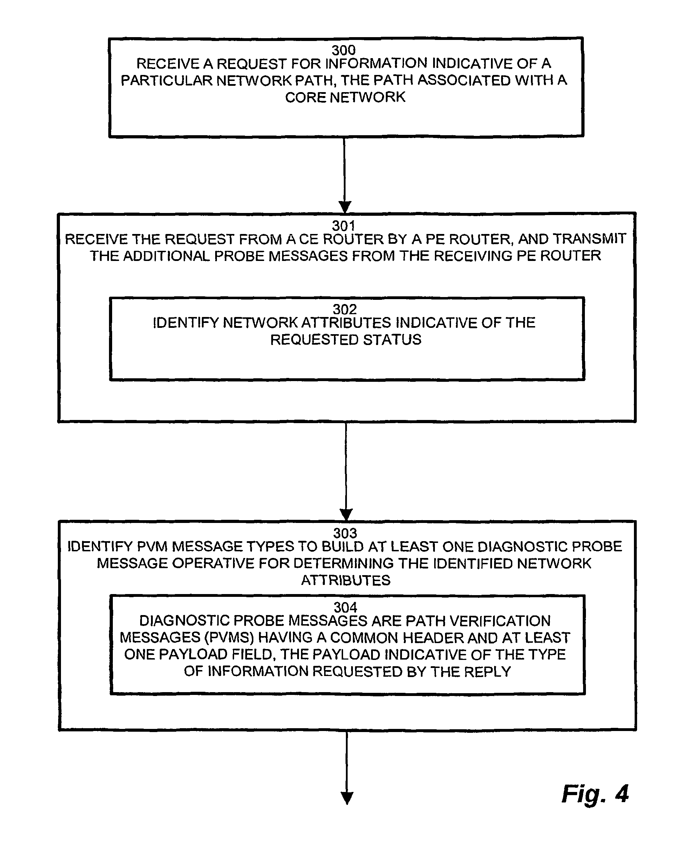

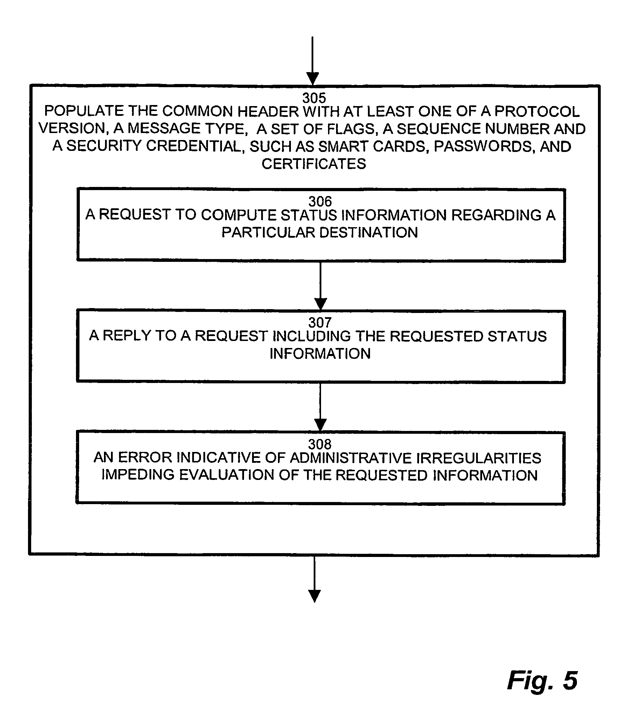

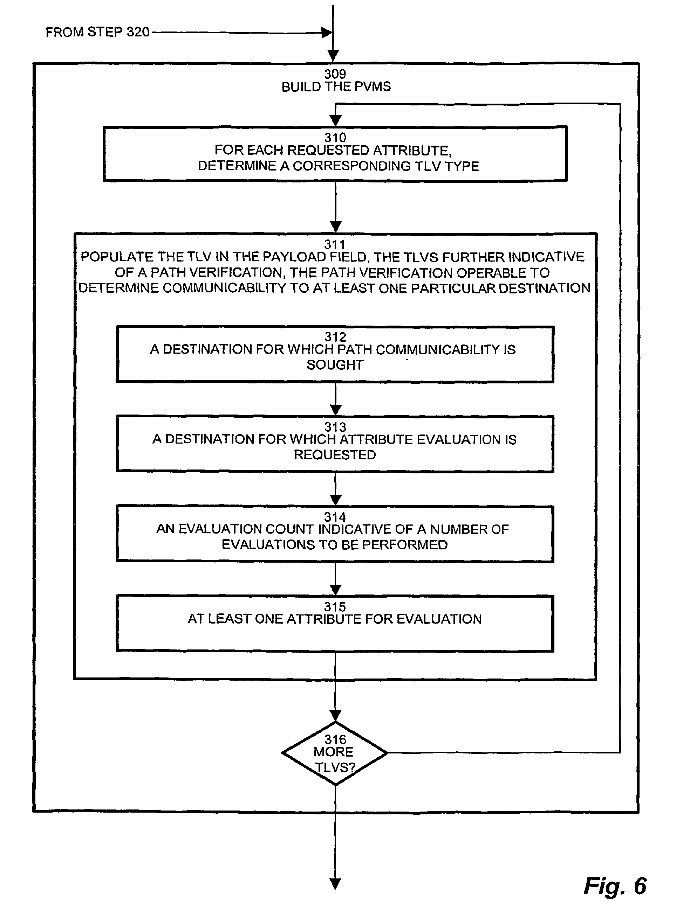

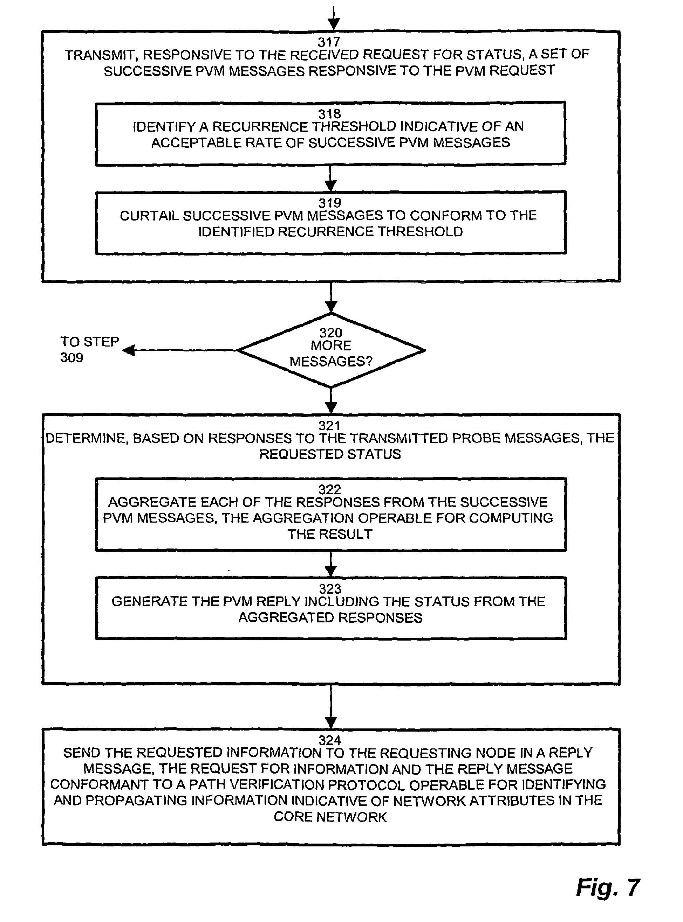

Figs. 4-7 are a flowchart of the operation of the path verification processor in the network of Fig. 3. Referring to Figs. 3-7, path verification messages employed by the path verification protocol provide a method of gathering information concerning network paths including receiving a request for information indicative of a particular network path, the path associated with a core network, as depicted at step 300. Typically this emanates from a CE 120 needing to make a routing decision. Accordingly, in the exemplary configuration, receiving the request for status comprises receiving the request from a CE router by a PE router, and transmitting the additional probe messages includes transmitting from the receiving PE router 130, as shown at step 301. The path verification processor 150 of the receiving PE 130 employs the diagnostic logic to identifying network attributes indicative of the requested status, as depicted at step 302.

Based on the diagnostic logic 156 and probe messages needed, the message builder 152 identifies PVM messages for building one or more diagnostic probe message 164 operative for determining the identified network attributes or other information, as disclosed at step 303. In the exemplary configuration, the diagnostic probe messages 164 are path verification messages (PVMs) having a common header and at least one payload field, in which the payload is indicative of the type of information requested by the reply 166, as depicted at step 304.

The PVM messages employ a common header. Accordingly, transmitting the PVM request 160 further includes populating the common header with at least one of a protocol version, a message type, a set of flags, a sequence number and a security credential, such as smart cards, passwords, and certificates, as depicted at step 305. The path verification messages further include message types including at least one of:
a request 160 to compute status information regarding a particular destination, as shown at step 306, a reply 162 to a request including the requested status information, as depicted at step 307, and an error indicative of administrative irregularities impeding evaluation of the requested information, as shown at step 308. Other message types are definable in alternate configurations.

Following building the common header, the message builder 152 completes building the path verification message (PVM) by building the payload, wherein the payload field is a set of variable length TLVs, as depicted at step 309. For each requested attribute, the message builder 152 determines a corresponding TLV type, as shown at step 310, and populates the TLV in the payload field, wherein the TLVs are further indicative of a path verification, the path verification operable to determine communicability to at least one particular destination, as depicted at step 311. Generally, the TLVs include path attribute requests for attributes indicative of communicability status. Therefore, depending on the diagnostic logic and the type of message, each of the TLVs further includes one or more of a destination for which path communicability is sought, as disclosed at step 312, a destination or path label for which attribute evaluation is requested, as shown at step 313, an evaluation count indicative of a number of evaluations to be performed 314, and at least one attribute for evaluation, as depicted at step 315. Typically, qualitative characteristics, such as those related to time, span a range depending on network load and other factors. Accordingly, a number of trials set by the evaluation count may be performed to provide a range of samples from which to draw conclusions.

A check is performed, at step 316, to determine if there are additional TLVs in this message, and control reverts to step 310 accordingly. When the message builder 152 builds a PVM, the path verification processor 150 transmits, responsive to the received request for status, the diagnostic probe messages 164 for determining the status, as shown at step 317. As multiple successive messages (e.g. probes) 164 may be sent to satisfy a particular request 160, sending the successive diagnostic probe messages 164 may include identifying a recurrence threshold indicative of an acceptable rate of successive PVM messages, as shown at step 318. The recurrence threshold is employed to curtail successive PVM messages to conform to the identified recurrence threshold and prevent flooding the system with excessive pings or inquiries, such as when a nonresponsive node is interrogated or other timeout related issues occur, as shown at step 319.

A check is performed, at step 320, to determine if there are additional messages 164 to send responsive to the PVM request 160, and control reverts to step 309 accordingly. If there are no additional messages 164 for the request 160, then the gatherer 154 retrieves the responses 166 for determining, based on responses 166 to the transmitted probe messages, the requested status, as shown at step 321. Accordingly, the gatherer aggregates each of the responses 166 from the successive PVM messages 164, in which the aggregation is operable for computing the result, as depicted at step 322. The diagnostic logic 156 then generates the PVM reply 162 including the status from the aggregated responses 166, as depicted at step 323. Often, computing the reply 162 includes analyzing results from a number of routers, such as a throughput rate at each of several routers 142 (i.e. round trip time), to assess performance of the full path 146, for example. The path verification processor 150 then sends the requested information to the requesting node 120-11 in a reply message 162, in which the request for information 160 and the reply message 162 both conform to the path verification protocol operable for identifying and propagating information indicative of network attributes in the core network, as depicted at step 324.

While the system and method for gathering information concerning network paths using a path verification protocol has been particularly shown and described with references to embodiments thereof, it will be understood by those skilled in the art that various changes in form and details may be made therein without departing from the scope of the invention encompassed by the appended claims. Accordingly, the present invention is not intended to be limited except by the following claims.

## Claims

1. A method of gathering information concerning network paths comprising:
receiving a request for information indicative of a particular network path, the path associated with a core network;
computing the requested information at a provider edge router associated with the core network, the core network being unavailable directly from a router initiating the request, wherein computing the requested information further comprises:
identifying network attributes indicative of the requested information;
transmitting at least one diagnostic probe message to determine the identified network attributes; and
determining, based on responses to the transmitted diagnostic probe messages, the requested information,
wherein the at least one diagnostic probe message includes a path verification message, PVM, having a common header and at least one payload field, the at least one payload field indicative of a type of information requested for a reply, wherein the at least one payload field is a set of variable length Type-Length-Value fields, TLVs; and
further comprising building the PVM by:
populating the common header; and
for each of the network attributes:
determining a corresponding TLV type; and
populating the TLV in the at least one payload field; and
sending the requested information to the requesting router in a reply message, the request for information and the reply message each comprising a PVM configured to identify and propagate, respectively, the information indicative of the network attributes in the core network.

2. The method of claim 1, further comprising:
transmitting, in response to the request for information, successive diagnostic probe messages configured to retrieve information for determining status information.

3. The method of claim 2, wherein receiving the request for information comprises receiving the request from a Customer Edge, CE, router by a Provider Edge, PE, router, and transmitting the successive diagnostic probe messages comprises transmitting form the PE router.

4. The method of any preceding claim, wherein transmitting the at least one diagnostic probe message further comprises populating the common header with at least one of a protocol version, a message type, a set of flags, a sequence number and a security credential, such as smart cards, passwords, and certificates.

5. The method of any preceding claim, wherein the TLVs are further indicative of a path verification, the path verification operable to determine communicability to at least one particular destination, each of the TLVs further including a destination for which path communicability is sought; and
an evaluation count indicative of a number of evaluations to be performed.

6. The method of any one of claims 1 to 5, wherein the TLVs include path attribute requests for attributes indicative of communicability status, each of the TLVs further including:
a destination for which attribute evaluation is requested;
an evaluation count indicative of a number of evaluations to be performed; and
at least one attribute for evaluation.

7. The method of any preceding claim, wherein the path verification messages further comprise a message type, which includes a request to compute status information regarding a particular destination.

8. The method of any preceding claim, further comprising:
sending a set of successive path verification messages responsive to a request for information;
aggregating each of a plurality of responses received in response to the successive path verification messages, wherein aggregating each of the responses includes computing a result; and
generating a path verification message reply, the path verification message reply including the result.

9. The method of claim 2, wherein sending the successive diagnostic probe messages further comprises:
identifying a recurrence threshold indicative of an acceptable rate of successive path verification messages; and
curtailing successive path verification messages to conform to the recurrence threshold.

10. A data communications system for gathering information concerning network paths configured to carry out the method of any preceding claim.

11. A computer program product having a computer readable medium operable to store computer program logic embodied in computer program code encoded thereon for performing a method according to any of claims 1 to 9.

## Patentansprüche

1. Verfahren zum Sammeln von Informationen, die Netzwerkpfade betreffen, das Folgendes umfasst:
Empfangen einer Anforderung von Informationen, die indikativ für einen bestimmten Netzwerkpfad sind, wobei der Pfad mit einem Kernnetzwerk assoziiert ist;
Berechnen der angeforderten Informationen an einem Provider Edge Router, der mit dem Kernnetzwerk assoziiert ist, wobei das Kernnetzwerk direkt von einem Router aus, der die Anforderung initiiert, nicht verfügbar ist, wobei das Berechnen der angeforderten Informationen des Weiteren Folgendes umfasst:
Identifizieren von Netzwerkattributen, die die angeforderten Informationen angeben;
Senden von wenigstens einer diagnostischen Probe-Nachricht zum Ermitteln der identifizierten Netzwerkattribute; und
Ermitteln der angeforderten Informationen auf der Basis von Antworten auf die gesendeten diagnostischen Probe-Nachrichten;
wobei die wenigstens eine diagnostische Probe-Nachricht eine Pfadverifikationsnachricht (Path Verification Message) PVM enthält, die einen gemeinsamen Header und wenigstens ein Nutzlastfeld aufweist,
wobei das wenigstens eine Nutzlastfeld einen Typ von für eine Antwort angeforderten Informationen angibt, wobei das wenigstens eine Nutzlastfeld ein Satz von Type-Length-Value- (Typ-Länge-Wert) - Feldern TLVs mit variabler Länge ist; und
des Weiteren umfassend das Aufbauen der PVM durch:
das Bestücken des gemeinsamen Headers; und
für jedes der Netzwerkattribute:
das Ermitteln eines entsprechenden TLV-Typs; und
das Bestücken des TLV in dem wenigstens einen Nutzlastfeld; und
Senden der angeforderten Informationen zu dem anfordernden Router in einer Antwortnachricht, wobei die Anforderung von Informationen und die Antwortnachricht jeweils eine PVM aufweisen, die so konfiguriert ist, dass sie die Informationen, die die Netzwerkattribute in dem Kernnetzwerk angeben, jeweils identifiziert und verbreitet.

2. Verfahren nach Anspruch 1, das des Weiteren Folgendes umfasst:
Senden, in Reaktion auf die Anforderung von Informationen, von aufeinanderfolgenden diagnostischen Probe-Nachrichten, die so konfiguriert sind, dass sie Informationen zum Ermitteln von Statusinformationen abrufen.

3. Verfahren nach Anspruch 2, wobei das Empfangen der Anforderung von Informationen das Empfangen der Anforderung ausgehend von einem Customer Edge Router durch einen Provider Edge Router umfasst und das Senden der aufeinanderfolgenden diagnostischen Probe-Nachrichten das Senden ausgehend von dem Provider Edge Router umfasst.

4. Verfahren nach einem der vorhergehenden Ansprüche, wobei das Senden der wenigstens einen diagnostischen Probe-Nachricht des Weiteren das Bestücken des gemeinsamen Headers mit wenigstens einem von einer Protokollversion, einem Nachrichtentyp, einem Satz von Kennzeichen (Flags), einer Sequenznummer und einem Sicherheitsberechtigungsnachweis, wie etwa Smart Cards, Passwörter und Zertifikate, umfasst.

5. Verfahren nach einem der vorhergehenden Ansprüche, wobei die TLVs des Weiteren eine Pfadverifikation angeben, wobei die Pfadverifikation dahingehend betreibbar ist, dass sie die Kommunikationsfähigkeit mit wenigstens einem bestimmten Ziel ermittelt, wobei jede der TLVs des Weiteren ein Ziel umfasst, für das die Pfadkommunikationsfähigkeit angestrebt wird; und
eine Auswertungszählung, die eine Anzahl an durchzuführenden Auswertungen angibt.

6. Verfahren nach einem der Ansprüche 1 bis 5, wobei die TLVs Pfadattributanforderungen für Attribute umfassen, die den Kommunikationsfähigkeitsstatus angeben, wobei jede der TLVs des Weiteren Folgendes umfasst:
ein Ziel, für das eine Attributauswertung angefordert wird;
eine Auswertungszählung, die eine Anzahl an durchzuführenden Auswertungen angibt; und
wenigstens ein Attribut zur Auswertung.

7. Verfahren nach einem der vorhergehenden Ansprüche, wobei die Pfadverifikationsnachrichten des Weiteren einen Nachrichtentyp umfassen, der eine Anforderung zum Berechnen von Statusinformationen in Bezug auf ein bestimmtes Ziel enthält.

8. Verfahren nach einem der vorhergehenden Ansprüche, das des Weiteren Folgendes umfasst:
Senden eines Satzes von aufeinanderfolgenden Pfadverifikationsnachrichten in Reaktion auf eine Anforderung von Informationen;
Aggregieren jeder einer Vielzahl von Antworten, die in Reaktion auf die aufeinanderfolgenden Pfadverifikationsnachrichten empfangen werden, wobei das Aggregieren jeder der Antworten das Berechnen eines Resultats umfasst; und
Erzeugen einer Pfadverifikationsnachrichtantwort, wobei die Pfadverifikationsnachrichtantwort das Resultat enthält.

9. Verfahren nach Anspruch 2, wobei das Senden der aufeinanderfolgenden diagnostischen Probe-Nachrichten des Weiteren Folgendes umfasst:
Identifizieren eines Wiederholungsschwellwerts, der eine akzeptable Rate von aufeinanderfolgenden Pfadverifikationsnachrichten angibt; und
Beschränken von aufeinanderfolgenden Pfadverifikationsnachrichten, um sich an den Wiederholungsschwellwert zu halten.

10. Datenkommunikationssystem zum Sammeln von Informationen, die Netzwerkpfade betreffen, das so konfiguriert ist, dass es das Verfahren nach einem der vorhergehenden Ansprüche ausführt.

11. Computerprogrammerzeugnis, das ein computerlesbares Medium aufweist, das so betreibbar ist, dass es eine Computerprogrammlogik speichert, die in einem darauf codierten Computerprogrammcode verkörpert ist, zum Durchführen eines Verfahrens nach einem der Ansprüche 1 bis 9.

## Revendications

1. Procédé pour rassembler des informations concernant des chemins de réseau comprenant les étapes consistant à _{:}
recevoir une demande d'informations indicatives d'un chemin de réseau particulier, le chemin étant associé à un réseau fédérateur ;
calculer les informations demandées au niveau d'un routeur de périphérie fournisseur associé au réseau fédérateur, le réseau fédérateur étant indisponible directement depuis un routeur initiant la demande, dans lequel le calcul des informations demandées comprend en outre les étapes consistant à _{:}
- identifier des attributs de réseau indicatifs des informations demandées,
- transmettre au moins un message de sonde diagnostique pour déterminer les attributs de réseau identifiés ; et
- déterminer, d'après des réponses aux messages de sonde diagnostique transmis, les informations demandées,
- dans lequel ledit au moins un message de sonde diagnostique inclut un message de vérification de chemin PVM ayant un en-tête commun et au moins un champ de données utiles, ledit au moins un champ de données utiles étant indicatif d'un type d'informations demandées pour une réponse, dans lequel ledit au moins un champ de données utiles est un jeu de champs de type-longueur-valeur TLV de longueur variable ; et
- comprenant en outre la construction du PVM par les étapes consistant à _{:}
- garnir l'en-tête commun ; et
- pour chacun des attributs de réseau .
-- déterminer un type de TLV correspondant ; et
-- - garnir ledit TLV dans le au moins un champ de données utiles ; et
envoyer les informations demandées au routeur de demande dans un message de réponse, la demande d'informations et le message de réponse comprenant chacun un PVM configuré pour identifier et propager, respectivement, les informations indicatives des attributs de réseau dans le réseau fédérateur.

2. Procédé selon la revendication 1, comprenant en outre l'étape consistant à :
transmettre, en réponse à la demande d'informations, des messages de sonde diagnostique successifs configurés pour récupérer des informations permettant de déterminer des informations de statut.

3. Procédé selon la revendication 2, dans lequel la réception de la demande d'informations comprend les étapes consistant à recevoir la demande d'un routeur de périphérie client CE par un routeur de périphérie fournisseur PE, et la transmission de messages de sonde diagnostique successifs comprend l'étape consistant à transmettre à partir du routeur PE.

4. Procédé selon l'une quelconque des revendications précédentes, dans lequel la transmission dudit au moins un message de sonde diagnostique comprend en outre l'étape consistant à garnir l'en-tête commun avec au moins l'un d'une version de protocole, d'un type de message, d'un jeu de drapeaux, d'un numéro de séquence et d'un justificatif d'identité de sécurité, tel que des cartes à puce intelligentes, des mots de passe et des certificats.

5. Procédé selon l'une quelconque des revendications précédentes, dans lequel les TLV sont en outre indicatifs d'une vérification de chemin, la vérification de chemin étant opérationnelle pour déterminer la communicabilité à au moins une destination particulière, chacun des TLV incluant en outre une destination pour laquelle une communicabilité de chemin est recherchée ; et
un décompte d'évaluation indicatif d'un nombre d'évaluations à effectuer.

6. Procédé selon l'une quelconque des revendications 1 à 5, dans lequel les TLV incluent des demandes d'attribut de chemin pour des attributs indicatifs d'un statut de communicabilité, chacun des TLV incluant en outre :
une destination pour laquelle une évaluation d'attribut est demandée ;
un décompte d'évaluation indicatif d'un nombre d'évaluations à effectuer ; et
au moins un attribut d'évaluation.

7. Procédé selon l'une quelconque des revendications précédentes, dans lequel les messages de vérification de chemin comprennent en outre un type de message, qui inclut une demande pour calculer des informations de statut concernant une destination particulière.

8. Procédé selon l'une quelconque des revendications précédentes, comprenant en outre les étapes consistant à _{:}
envoyer un jeu de messages de vérification de chemin successifs en réponse à une demande d'informations ;
regrouper chacune d'une pluralité de réponses reçues en réponse aux messages de vérification de chemin successifs, dans lequel le regroupement de chacune des réponses inclut l'étape consistant à calculer un résultat ; et
générer une réponse de message de vérification de chemin, la réponse de message de vérification de chemin incluant le résultat.

9. Procédé selon la revendication 2, dans lequel l'envoi des messages de sonde diagnostique successifs comprend en outre les étapes consistant à _{:}
identifier un seuil de récurrence indicatif d'un taux acceptable de messages de vérification de chemin successifs ; et
écourter les messages de vérification de chemin successifs pour se conformer au seuil de récurrence.

10. Système de communication de données permettant de regrouper des informations concernant des chemins de réseau configuré pour réaliser le procédé de l'une quelconque des revendications précédentes.

11. Produit de programme informatique comportant un support lisible par ordinateur opérationnel pour stocker une logique de programme d'ordinateur intégrée dans un code de programme informatique encodé dessus pour réaliser un procédé selon l'une quelconque des revendications 1 à 9.
